# EUROPÄISCHE PATENTSCHRIFT

(11) **EP 2 820 932 B1**
(45) Veröffentlichungstag und Bekanntmachung des Hinweises auf die Patenterteilung: **29.08.2018**
(21) Anmeldenummer: 14170317.3
(22) Anmeldetag: 28.05.2014
(51) Int. Cl.: A01B 59/06

(54) **Anhängevorrichtung**
Trailer coupling
Dispositif d'attelage

(30) Priorität: 19.06.2013 DE 102013211516
(43) Veröffentlichungstag der Anmeldung: 07.01.2015
(73) Patentinhaber: Deere & Company, Moline, IL 61265 (US)
(72) Erfinder: Heitlinger, Martin, 76684 Östringen (DE); Oberhaus Dr., Christian, 68239 Mannheim (DE); Kremmer Dr., Martin, 68163 Mannheim (DE)
(74) Vertreter: John Deere GmbH & Co. KG

(56) Entgegenhaltungen:
- EP-A1- 2 457 752
- EP-A2- 1 251 016
- US-A- 4 340 240
- US-A1- 2004 155 430
- US-B1- 6 712 381

## Beschreibung

Die Erfindung betrifft eine Anhängevorrichtung für ein landwirtschaftliches Arbeitsfahrzeug, mit zwei am Fahrzeugheck abgestützten und vertikal ausgerichteten Seitenwangen und einer ein Kupplungsglied tragende Platte, wobei die Platte in jeweils einander zugewandte horizontale Führungsnuten an unteren Enden der Seitenwangen in eine Arbeitsposition einschiebbar ist.

US 2004/0155430 A1 zeigt eine Anhängekupplung für ein Arbeitsfahrzeug mit zwei Führungsschienen, die parallel zueinander angeordnet sind.

US4,340,240 beschreibt eine Drei-Punkt-Hitch für einen Traktor mit einer Kupplungsvorrichtung zum Anhängen von unterschiedlichen Vorrichtungen.

EP 2457752 A1 zeigt eine Kupplungs- und Anhängevorrichtung für Zugfahrzeuge mit zwei vertikal angeordneten Führungsnuten.

Ausgehend hiervon besteht die Aufgabe der vorliegenden Erfindung darin, eine zumindest teilweise kompakt bauende Anhängevorrichtung bereitzustellen.

Die Aufgabe wird gelöst durch eine Anhängevorrichtung für ein landwirtschaftliches Arbeitsfahrzeugnach Anspruch 1.

Bei der Platte mit der Kupplungskugel handelt es sich beispielsweise um eine K80 Kugelkopfkupplungslade. Hierbei bedeutet K80, dass eine Kugel mit 80mm Durchmesser vorgesehen ist. Ein kugelseitiger Niederhalter sorgt dafür, dass die Kupplungspfanne des Anhängers oder der angehängten Maschine nicht von der Kugel rutscht.

Die vertikal ausgerichteten Seitenwangen werden auch als U-Schienen bezeichnet. Ihr lateraler Abstand wird als Spurweite, Schienenbreite oder auch Führungsabstand bezeichnet.

Bei der erfindungsgemäßen Anhängevorrichtung ist von Vorteil, dass der geringere Führungsabstand zwischen den unteren Enden der Seitenwangen beziehungsweise den U-Schienen zu einer reduzierten Breite der Anhängevorrichtung in dem Bereich führt, in dem die Unterlenker in Fahrzeuglängsrichtung nach hinten zum Überstand über das Fahrzeug geführt werden. Durch diesen reduzierten Führungsabstand der Seitenwangen ist es möglich, kostengünstige Flachstahlunterlenker an dem Fahrzeug zu verbauen. Weiterhin führt der reduzierte Führungsabstand zwischen den unteren Enden der Seitenwangen zu einer kraft- und spannungsoptimierten Ausgestaltung im Aufnahmebereich der Kugellade, so dass eine Stützlast von vier Tonnen bereitgestellt wird.

Bevorzugt ist die Platte in eine Transportposition einschiebbar, in der die Platte auf das Fahrzeugheck zu in vertikaler Richtung abfallend geneigt ist. Hierbei ist von Vorteil, dass in der Transportposition eine Verstauungsmöglichkeit für die Kugellade bereitgestellt wird. Zudem ergibt sich für die Bedienperson eine klare Abgrenzung der Arbeitsposition von der Transportposition, da in der Transportposition die Kugellade abfallend geneigt ist. Dies bietet Kundennutzen und stellt beim Versand des Fahrzeugs aus der Fabrik sicher, dass Zubehör sicher am Fahrzeug verstaut ist. Es ist vorgesehen, dass in der Transportposition ein Anhänger mit Kupplungspfanne nicht angehängt werden kann, da der kugelseitige Niederhalter infolge der Neigung nicht geöffnet werden kann.

Bevorzugt ist die Platte zwischen den Seitenwangen in jeweils einander zugewandte Schienen bis zu einer Dreipunkt-Klemmung in die Transportposition einschiebbar. Hierbei kann vorgesehen sein, dass die Schienen als in die Seitenwangen eingegossene Schienen bereitgestellt werden. In einer Ausführungsform kann vorgesehen sein, dass die Platte in der Transportposition mittels zumindest eines Steckbolzens arretierbar ist. Hierdurch ist eine zusätzliche formschlüssige Verliersicherung bereitgestellt.

Bevorzugt ist oberhalb der Platte eine von den Seitenwangen höhenverstellbar gehaltene Kupplungsvorrichtung vorgesehen. Hiermit ergibt sich eine 5 Positionen 3/1 Anhängevorrichtung mit drei Anhängevarianten, nämlich Zugpendel, K80 Kugellade, oder alternativ Piton-fix, und obere Anhängekupplung, bei gleichzeitiger Möglichkeit, die Kugellade in der Transportposition während des Zugpendelbetriebs zu verstauen.

Bevorzugt ist die Platte in der Transportposition annähernd 30° abfallend geneigt. Hiermit wird eine als im englischen Sprachgebrauch bezeichnete fail-safe-Funktion bereitgestellt.

Ein Ausführungsbeispiel der erfindungsgemäßen Anhängevorrichtung wird anhand der nachfolgenden Zeichnungen beschrieben. Hierin zeigen
- Figur 1: eine perspektivische Darstellung einer erfindungsgemäßen Anhängevorrichtung mit der Kugellade in der Arbeitsposition und Zwangslenkungsvorrichtung und
- Figur 2: eine perspektivische Darstellung einer erfindungsgemäßen Anhängevorrichtung mit der Kugellade in der Arbeitsposition ohne Zwangslenkungsvorrichtung.

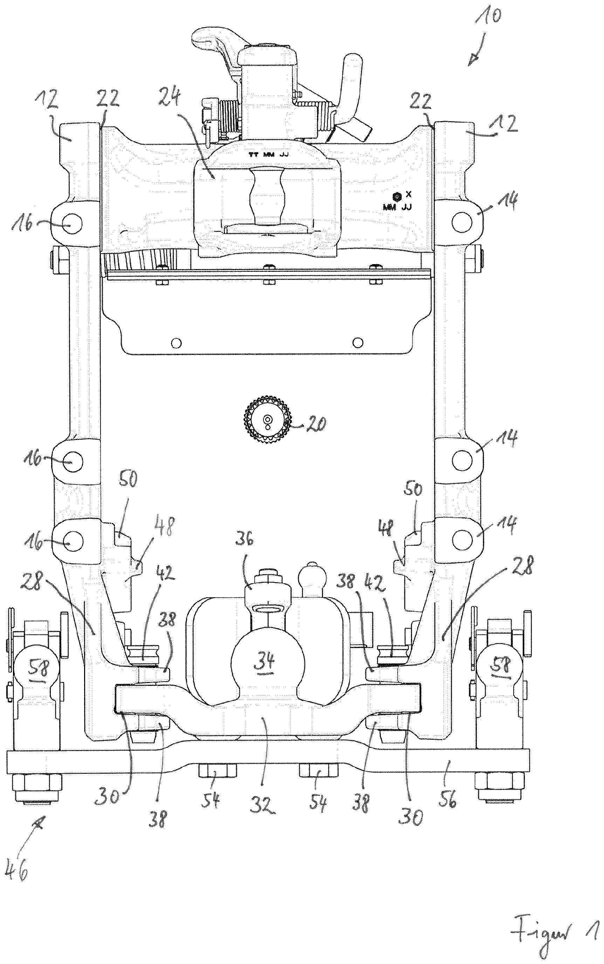

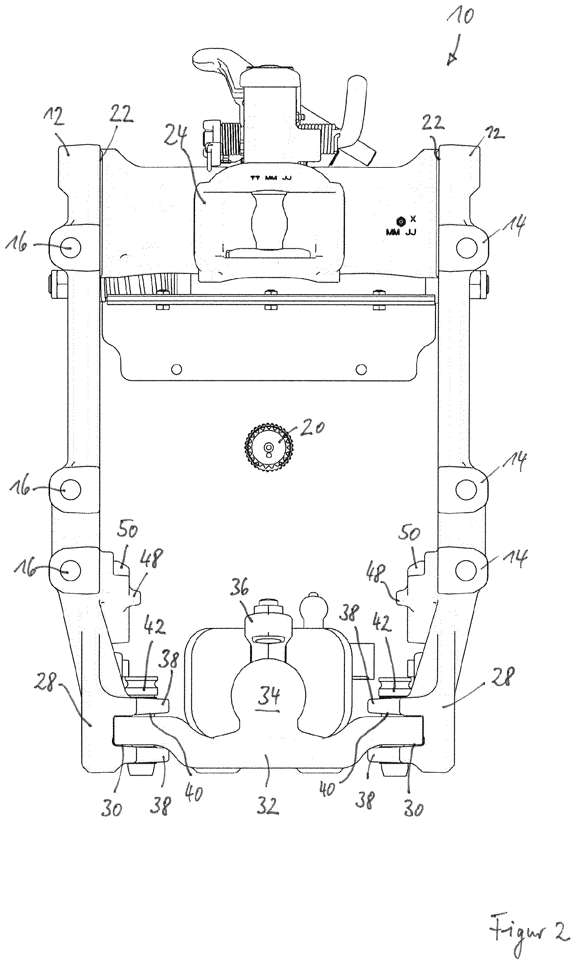

Die Figuren 1 und 2 werden zunächst gemeinsam beschrieben und zeigen eine erfindungsgemäße Anhängevorrichtung 10, die heckseitig an einem nicht dargestellten Arbeitsfahrzeug, welches insbesondere ein Schlepper sein kann, angebracht ist. Die Anhängevorrichtung 10 umfasst zwei Seitenwangen 12, die vertikal und grundsätzlich parallel zueinander ausgerichtet sind. Die Seitenwangen 12 weisen vorliegend jeweils drei Befestigungsansätze 14 auf, die von Durchgangsbohrungen 16 zur Befestigung der Anhängevorrichtung 10 an einem Fahrzeugheck, insbesondere einem Zapfwellengehäuse und/oder Differentialgehäuse, mittels nicht dargestellten Haltebolzen durchsetzt sind. Im Hintergrund der Anhängevorrichtung 10 ist eine Zapfwelle 20 zu erkennen.

In die Seitenwangen 12 ist jeweils eine vertikale Führungsnut 22 eingeformt. Die Führungsnuten 22 sind innenseitig einander zugewandt und dienen zur Aufnahme einer höhenverstellbaren Kupplungsvorrichtung 24. Zur Arretierung der Kupplungsvorrichtung 24 weisen die Seitenwangen im Bereich der vertikalen Führungsnuten 22 nicht dargestellte lateral gerichtete Bohrungen auf, in die Rastbolzen der Kupplungsvorrichtung 24 zu deren Arretierung in unterschiedlichen Höhen eingreifen können.

Die unteren Enden 28 der Seitenwangen 12 sind aufeinander zu eingezogen, so dass die Seitenwangen 12 in diesem Bereich einen reduzierten beziehungsweise geringeren Führungsabstand als in den darüberliegenden Bereichen aufweisen. Hierdurch ist der Einsatz von Flachstahlunterlenkern anstelle von S-förmig gekröpften Schmiedeunterlenkern möglich, mit dem Vorteil eines günstigen Kraftverlaufs und der kostengünstigeren Herstellung.

Im Bereich der unteren Enden 28 der Seitenwangen 12 sind an diesen einander zugewandt horizontale Führungsnuten 30 angeformt, die zum Einschieben und anschließenden horizontalen Aufnahme einer Platte 32 dienen, wie in der Figur 1 zu erkennen ist. Auf der Platte 32 ist ein Kupplungsglied 34 in Form einer Kugelkopfkupplung gehalten. Auf der Platte 32 ist weiterhin ein Niederhalter 36 verschwenkbar gehalten, um eine nicht dargestellte Kupplungspfanne gegenüber der Kugelkopfkupplung 34 zu sichern und ein Lösen der Verbindung während der Fahrt zu verhindern. Die Einheit bestehend aus Platte 32, Kugelkopfkupplung 34 und Niederhalter 36 kann auch als Kugellade bezeichnet werden.

In der Figur 1 ist zu erkennen, dass eine Zwangslenkungsvorrichtung 46 mittels Haltebolzen 54 von unten an der Platte 32 gehalten ist. Die Zwangslenkungsvorrichtung 46 umfasst eine Quertraverse 56 und an deren Endbereichen lösbar gehaltene K50 Kugelköpfe 58 zur Aufnahme zur Aufnahme der Kupplungspfannen der Zwangslenker eines Anhängers oder einer angehängten Maschine. Zu erkennen ist hierbei insbesondere, dass die Kugelköpfe 58 in dem durch die aufeinander zu eingezogenen unteren Enden 28 der Seitenwangen 12 freigegebenen Raum angeordnet sind. Die Breite der Zwangslenkungsvorrichtung 46 kann somit ebenfalls reduziert werden, um den Einsatz von Flachstahlunterlenkern anstelle von S-förmig gekröpften Schmiedeunterlenkern zu ermöglichen.

Die Seitenwangen 12 weisen beidseits der horizontalen Führungsnuten 30 Haltelaschen 38 mit vertikal fluchtenden Bohrungen 40 auf, in die Steckbolzen 42 eingesteckt sind. Zur Übertragung von Zugkräften von der Kugelkopfkupplung 34 über die Platte 32 auf die Seitenwangen 12 weist die Platte 32 ebenfalls Bohrungen 44 auf, so dass die Steckbolzen 42 bei in die horizontalen Führungsnuten 30 eingeschobener Platte 32 durch die Bohrungen 40 der Haltelaschen 38 und die Bohrungen 44 der Platte 32 durchgesteckt sind. Zur Sicherung der eingesteckten Steckbolzen 42 dienen durch die Steckbolzen durchschiebbare Sicherungsspangen.

Im Betrieb kann ein Zugpendel zum Einsatz kommen, welches an einem unteren Bereich des Schleppers befestigt ist und nach hinten in einen Bereich ragt, in dem die Kugellade sich in der Arbeitsposition befindet. Demnach können nicht gleichzeitig ein Zugpendel und eine Kugellade in der Arbeitsposition montiert sein. Erfindungsgemäß ist hiervon ausgehend vorgesehen, dass bei Zugpendelbetrieb die Kugellade in eine nicht dargestellte Transportposition überführt werden kann, in der sie nicht mit dem Zugpendel kollidiert. Die Transportposition der Kugellade zeichnet sich dadurch aus, dass sie in vertikaler Richtung oberhalb der Arbeitsposition der Kugellage liegt und dass die Kugellade auf das Fahrzeugheck zu in vertikaler Richtung abfallend geneigt ist. Der Neigungswinkel beträgt vorliegend 30° bezogen auf eine Horizontale, kann hiervon aber auch abweichen.

In der Figur 2 ist zu erkennen, dass an den Seitenwangen 12 einander zugewandt Schienen 48 angeformt sind, die zur Aufnahme der Kugellade in der ansonsten nicht dargestellten Transportposition dienen. Die Kugellade auf den Schlepper zu eingeschoben und zwar bis zu einer Dreipunkt-Klemmung, die aus zwei Klemmpunkten mit der Schiene 48 und aus einem weiteren Klemmpunkt mit einem vertikal oberhalb der Schiene 48 angeordneten Klemmvorsprung 50 besteht, der in Figur 1 zu erkennen ist. Zusätzlich zu dieser Dreipunkt-Klemmung kann vorgesehen sein, dass die zur jeweils anderen Seitenwange 12 ragenden Stirnseiten der Schiene 48 derart mit einer Kontur 52 versehen sind, dass die Kugellade über die in die Bohrungen 44 eingesteckten Steckbolzen 42 formschlüssig gegenüber den Schienen 48 gesichert ist. Bei der Schiene 48 handelt es sich bevorzugt um eine eingegossene Rohgussschiene. Auf eine anschließende Oberflächenbearbeitung kann verzichtet werden. Es wird eine werkzeuglose und verliersichere Klemmung der Kugellade unabhängig von der Gusstoleranz der Seitenwangen 12 bereitgestellt.

Durch die erfindungsgemäße Anhängevorrichtung ergeben sich im oberen Bereich ein Zapfwellenfreiraum nach Standard ISO 500 mit einer Innenbreite von 360 mm für eine Zapfwelle Typ 3 und im unteren Bereich eine schlanke kraft- und spannungsoptimierte Gestaltung zur Aufnahme einer K80 Kugelschublade bei einer Stützlast von vier Tonnen. Hierdurch wird volle Kompatibilität zu den IT4 K50 Zwangslenkungsteilen, entweder einseitig oder beidseitig, mit Freiräumen nach ISO 26402 und der Einsatz von Flachstahlunterlenkern mit Vorteilen beim Kraftverlauf und den Herstellkosten ermöglicht.

Die Transportposition für die Kugellade ermöglicht das Mitführen der Kugellade beim Einsatz eines Zugpendels am der 3-Varianten Anhängevorrichtung bestehend aus 5 Pos. 3/1 Vorrichtung mit Zugpendel, K80 Kugellade, oder alternativ ein Piton-fix, und oberer Kupplungsvorrichtung bei gleichzeitig voller Zapfwellenbeweglichkeit, da der ISO500 Zapfwellenfreiraum nicht beeinträchtigt wird. Für den Bediener ergibt sich eine klare Unterscheidung zwischen der Arbeitsposition und der Transportposition, da letztere zum Fahrzeug hin abfallend ausgeführt ist. Zudem ist eine K80 Kupplungspfanne in der Transportposition der Kugellade nicht kuppelbar, da der Niederhalter der Kugellade nicht geöffnet werden kann. Schließlich ist in der Transportposition der Zugang zu der Zapfwelle blockiert, so dass eine Gelenkwelle nicht kuppelbar ist.

### Bezugszeichenliste

- 10: Anhängevorrichtung
- 12: Seitenwange
- 14: Befestigungsansatz
- 16: Durchgangsbohrung
- 20: Zapfwelle
- 22: Führungsnut
- 24: Kupplungsvorrichtung
- 28: unteres Ende der Seitenwangen
- 30: Führungsnut
- 32: Platte
- 34: Kupplungsglied
- 36: Niederhalter
- 38: Haltelasche
- 40: Bohrung
- 42: Steckbolzen
- 44: Bohrung
- 46: Zwangslenkungsvorrichtung
- 48: Schiene
- 50: Klemmvorsprung
- 52: Kontur
- 54: Haltebolzen
- 56: Quertraverse
- 58: Kugelkopf

## Patentansprüche

1. Arbeitsfahrzeug, insbesondere Schlepper, mit einer Anhängevorrichtung (10), umfassend zwei am Fahrzeugheck abgestützte und vertikal ausgerichtete Seitenwangen (12) und eine ein Kupplungsglied (34) tragende Platte (32), wobei die Platte (32) in jeweils einander zugewandte horizontale Führungsnuten (30) an unteren Enden (28) der Seitenwangen (12) in eine Arbeitsposition einschiebbar ist und mittels zumindest eines Steckbolzens (42) arretierbar ist, **dadurch gekennzeichnet, dass** die unteren Enden (28) der Seitenwangen (12) aufeinander zu eingezogen sind, um einen geringeren Führungsabstand als in den darüber liegenden Bereichen zu bilden, und dass eine Zwangslenkungsvorrichtung (46) mit einer Quertraverse (56) und in deren Endbereichen lösbar gehaltenen Kugelköpfen (58) mittels Haltebolzen (54) von unten an der Platte (32) gehalten ist, wobei die Kugelköpfe (58) in dem durch die aufeinander zu eingezogenen unteren Enden (28) der Seitenwangen (12) freigegebenen Raum angeordnet sind.

2. Arbeitsfahrzeug nach Anspruch 1, wobei die Platte (32) in eine Transportposition einschiebbar ist, in der die Platte (32) auf das Fahrzeugheck zu in vertikaler Richtung abfallend geneigt ist.

3. Arbeitsfahrzeug nach Anspruch 2, wobei die Platte (32) zwischen den Seitenwangen (12) in jeweils einander zugewandte Schienen (48) bis zu einer Dreipunkt-Klemmung in die Transportposition einschiebbar ist.

4. Arbeitsfahrzeug nach Anspruch 2 oder 3, wobei die Platte (32) mittels zumindest eines Steckbolzens (42) in der Transportposition arretierbar ist.

5. Arbeitsfahrzeug nach einem der Ansprüche 1 bis 4, wobei oberhalb der Platte (32) eine von den Seitenwangen (12) höhenverstellbar gehaltene Kupplungsvorrichtung (24) vorgesehen ist.

## Claims

1. Working vehicle, in particular tractor, with a trailer device (10) comprising two side members (12) which are supported on the vehicle rear and are oriented vertically, and a plate (32) which carries a coupling member (34), wherein the plate (32) is pushable in each case mutually facing horizontal guide grooves (30) at lower ends (28) of the side members (12) into a working position and is lockable by means of at least one plug-in bolt (42), **characterized in that** the lower ends (28) of the side members (12) are drawn in towards each other in order to form a smaller guiding distance than in the regions lying thereabove, and **in that** a forced steering device (46) with a crosspiece (56) and ball heads (58), which are held releasably in the end regions thereof, is held on the plate (32) from below by means of holding bolts (54), wherein the ball heads (58) are arranged in the space opened up by means of the lower ends (28), which are drawn in towards each other, of the side members (12).

2. Working vehicle according to Claim 1, wherein the plate (32) is pushable into a transport position in which the plate (32) is inclined dropping in the vertical direction towards the vehicle rear.

3. Working vehicle according to Claim 2, wherein the plate (32) is pushable between the side members (12) in in each case mutually facing rails (48) into the transport position as far as a three-point clamping.

4. Working vehicle according to Claim 2 or 3, wherein the plate (32) is lockable in the transport position by means of at least one plug-in bolt (42).

5. Working vehicle according to one of Claims 1 to 4, wherein a coupling device (24) which is held in a height-adjustable manner by the side members (12) is provided above the plate (32).

## Revendications

1. Véhicule de travail, en particulier tracteur, comprenant un dispositif de remorque (10), comprenant deux parois latérales (12) supportées à l'arrière du véhicule et orientées verticalement et une plaque (32) portant un organe d'accouplement (34), la plaque (32) pouvant être enfoncée dans des rainures de guidage horizontales (30) tournées l'une vers l'autre aux extrémités inférieures (28) des parois latérales (12) dans une position de travail et pouvant être bloquée au moyen d'au moins un boulon enfichable (42), **caractérisé en ce que** les extrémités inférieures (28) des parois latérales (12) sont tirées l'une vers l'autre afin de former un interstice de guidage plus faible que dans les régions situées au-dessus, et **en ce qu'**un dispositif de direction forcée (46) est retenu par le dessous à la plaque (32)au moyen de boulons de retenue (54) avec une traverse (56) et des têtes sphériques (58) retenues de manière détachable dans ses régions d'extrémité, les têtes sphériques (58) étant disposées dans l'espace libéré par les extrémités inférieures (28) tirées l'une vers l'autre des parois latérales (12).

2. Véhicule de travail selon la revendication 1, dans lequel la plaque (32) peut être enfoncée dans une position de transport dans laquelle la plaque (32) est inclinée vers l'arrière du véhicule en descendant dans la direction verticale.

3. Véhicule de travail selon la revendication 2, dans lequel la plaque (32) peut être enfoncée entre les parois latérales (12) dans des rails (48) respectivement tournés l'un vers l'autre jusqu'à un serrage à trois points dans la position de transport.

4. Véhicule de travail selon la revendication 2 ou 3, dans lequel la plaque (32) peut être bloquée dans la position de transport au moyen d'au moins un boulon enfichable (42).

5. Véhicule de travail selon l'une quelconque des revendications 1 à 4, dans lequel, au-dessus de la plaque (32) est prévu un dispositif d'accouplement (24) retenu de manière réglable en hauteur par les parois latérales (12).
